# EUROPEAN PATENT SPECIFICATION

(11) **EP 1 153 689 B1**
(45) Date of publication and mention of the grant of the patent: **10.12.2003**
(21) Application number: 00114071.4
(22) Date of filing: 06.07.2000
(51) Int. Cl.: B23H 7/26, B23H 1/10

(54) **ELECTRODE CLAMPING SYSTEM FOR EDM-SINKING MACHINES**
ELEKTRODEN-KLEMMVORRICHTUNG FÜR FUNKENEROSIONSBEARBEITUNGSVORRICHTUNG
DISPOSITIF DE SERRAGE POUR UNE ELECTRODE POUR UNE MACHINE D'USINAGE PAR ELECTROEROSION

(30) Priority: 08.05.2000 SI 200000116
(43) Date of publication of application: 14.11.2001
(73) Proprietor: Dobovsek, Marjan, 61000 Ljubljana (SI); Otto, Mark, 1240 Kamnik (SI); Paradizova, Marina, 1240 Kamnik (SI); Mrhar, Boris, 1000 Ljubljana (SI); Martincic, Tomaz, 1000 Ljubljana (SI)
(72) Inventor: Dobovsek, Marjan, 61000 Ljubljana (SI); Otto, Mark, 1240 Kamnik (SI); Paradizova, Marina, 1240 Kamnik (SI); Mrhar, Boris, 1000 Ljubljana (SI); Martincic, Tomaz, 1000 Ljubljana (SI)
(74) Representative: Banzer, Hans-Jörg, Dipl.-Ing.

(56) References cited:
- EP-A- 0 299 161
- US-A- 3 293 166
- US-A- 5 245 152
- PATENT ABSTRACTS OF JAPAN vol. 009, no. 152 (M-391), 27 June 1985 (1985-06-27) -& JP 60 029245 A (MITSUBISHI DENKI KK), 14 February 1985 (1985-02-14)
- PATENT ABSTRACTS OF JAPAN vol. 007, no. 128 (M-220), 3 June 1983 (1983-06-03) -& JP 58 045821 A (MITSUBISHI DENKI KK), 17 March 1983 (1983-03-17)

## Description

The present invention relates to an electrode clamping system for EDM-sinking machines according to the preamble of claim 1. In particular, the clamping system comprises an adjustable holder for clamping electrodes of different sizes and a dielectric flow control system. The electrode clamping system of the present invention provides lateral flush through the adjustable holder.

There are holders for clamping electrodes (e.g. clamp 3R-651.13, 3R-658.2E combined with 3R-651E-LS, produced by 3R from Sweden), but they do not enable dielectric supply to the electrode through them.

There are also holders where clamping of electrodes is possible (e.g. clamp 3R-608.32 in combination with 3R-601.3, produced by 3R from Sweden), and they enable dielectric supply to the electrode through an outer flexible flushing tube (e.g. 3R-103), which is attached to the holder but does not lead through it. Here the flushing tube must be adjusted for every electrode manually to ensure a dielectric flow in the wanted direction. Unfortunately, the flexible flushing tube cannot always be placed due to limited space between the clamping system and the machining part.

From Patent Abstracts Of Japan, vol. 009, no. 152 (M-391), 27 June 1985, & JP 60 029 245 A, an electrode clamping system having the features of the preamble of claim 1 is known. This electrode clamping system comprises an adjustable holder for clamping an electrode having two fixed parts, each fixed part comprising a dielectric supply channel. An electrode is clamped between both fixed parts by means of bolts.

From EP 0 299 161 A1, a holder system for electrodes of an EDM-sinking machine is known. The electrode has the shape of a horizontal disc being fixed to the respective holder, and the holder comprises one internal channel for the dielectric material as well as additional external channels for a symmetrical supply of the dielectric material onto the horizontal electrode. This system does not allow the clamping of electrodes of different sizes.

Further electrode holding systems for EDM-sinking machines are known from US 5,245,152 and Patent Abstracts Of Japan, vol. 007, no. 128 (M-220), 3 June 1983, & JP 58 045 821 A. Finally, US 3,293,166 discloses an electrode for electrolytic machining which is a hollow member being machined outwardly at its working end, the electrolyte flow being directed towards the machining part and away from the hollow portion through which a central electrolyte flow is flowing. However, this prior art document does not relate to an EDM-sinking machine or an electrode clamping system for EDM-sinking machines, but instead to electrolytic machining.

The object underlying the present invention is to provide an electrode clamping system for EDM-sinking machines for clamping electrodes of different sizes and being able to supply a dielectric in such a way that contamination particles produced by the EDM-sinking process can be flushed away from a gap between the electrode and the machining part, especially in case of deep slots.

According to the present invention, this object is achieved by an electrode clamping system for EDM-sinking machines having the features of claim 1. The dependent claims define preferred and advantageous embodiments of the present invention.

The electrode clamping system of the present invention comprises a holder which enables a simple clamping of electrodes and supplies the dielectric into two or several nozzles allowing for control of the dielectric flow into a slot between the electrode and the machining part. Furthermore, the electrode clamping system may comprise an automatic control circuit for controlling the pressure and the flow of the dielectric. The supply of the dielectric during the EDM-sinking process is ensured by the holder on the EDM-sinking machine head and automatically by mounting the electrode clamping system on the machine head.

In the following, a preferred embodiment of the electrode clamping system of the present invention will be explained in detail with reference to the attached drawing.
Figure 1 shows a sectional view of an electrode clamping system according to the preferred embodiment of the present invention;
Figure 2 shows schematically the holder of the electrode clamping system, when viewed from below, having round nozzles;
Figure 3 shows schematically the holder of the electrode clamping system, when viewed from below, having rectangular nozzles; and
Figure 4 shows schematically a control circuit for the supply of the dielectric into the holder of the electrode clamping system.

During the EDM-sinking process, the electrode clamping system of the present invention enables automatically a symmetrical supply of the dielectric from two sides of the electrode through chambers and nozzles of the electrode clamping system without any assistance of an EDM-sinking machine operator.

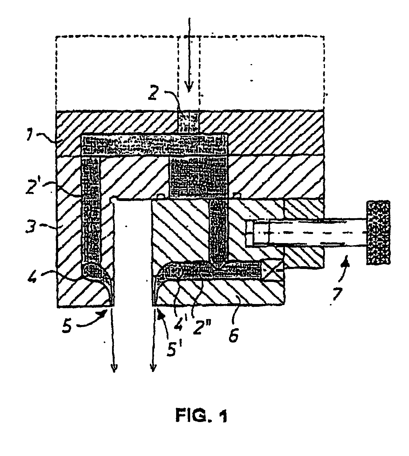

The electrode clamping system according to the invention shown in Figure 1 enables the clamping of electrodes of different sizes. The electrode clamping system comprises a holder which consists of a basic part 1 where a dielectric supply channel 2 splits, a fixed part 3 having a supply channel 2', a chamber 4 and a nozzle 5, an adjustable part 6 having a supply channel 2 " , a chamber 4' and a nozzle 5', as well as a button 7 for enabling a movement of the adjustable part 6 so as to effect the clamping of an electrode.

The dielectric supply channels 2, 2', 2'' lead through the holder according to the invention in such a way that they enable the dielectric supply through a chuck in the head of the EDM-sinking machine into the chambers 4, 4' of the fixed part 3 and the adjustable part 6, respectively, of the holder even if the jet width is narrower than the electrode width.

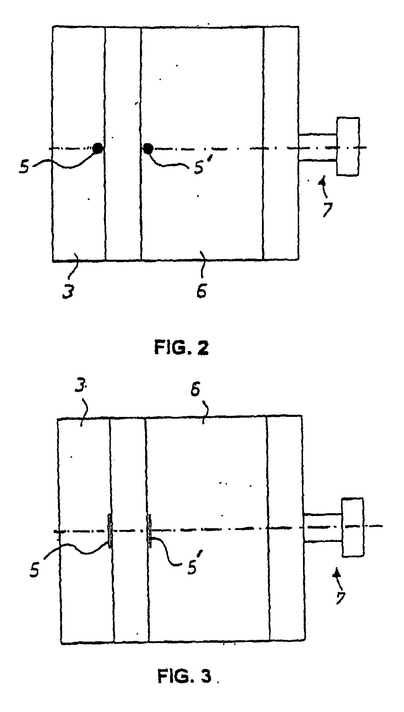

Figure 2 shows the holder according to the invention in the ground plane, when viewed from below, having round nozzles 5, 5', while Figure 3 shows the holder according to the invention in the ground plane, when viewed from below, having rectangular nozzles 5, 5'. The particular nozzle shape choice depending on the electrode shape enables the dielectric supply through the holder at a maximum possible speed from both sides of the electrode.

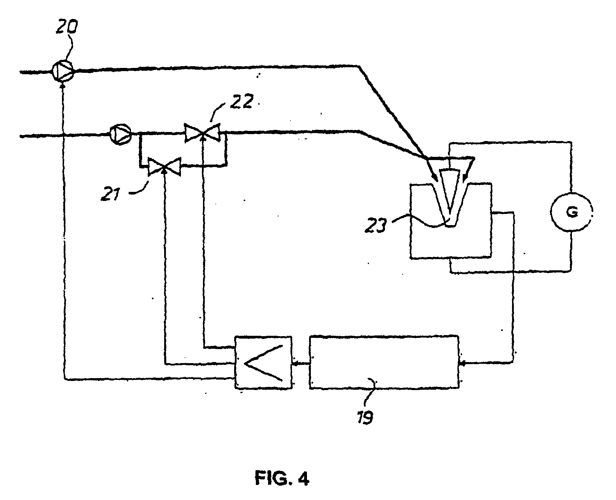

Figure 4 shows a control circuit for the above-mentioned electrode clamping system. The control circuit consists of an automatic control part 19, a corresponding amplifier and a control pump 20 (version 1) and/or electromagnetic valves 21, 22 (version 2). The dielectric pressure and in turn the dielectric flow are controlled by the automatic control part 19, the dielectric flow being controlled with reference to the contamination particle concentration in a gap 23 between the electrode and the machining part either by the control pump 20 (version 1) or by the electromagnetic valves 21, 22 (version 2). In this way, different flow values are ensured, depending on the machining depth. Figure 4 shows both versions.

At the transition from rough to fine machining by means of the introduction of the orbital movement, the dielectric flow must be reduced. Excessive dielectric flow causes electrode vibration and unstable EDM-sinking. This is the reason why, at the moment of transition from rough to fine machining, the control circuit automatically reduces the dielectric flow to a value where the electrode vibrations caused by the dielectric supply disappear.

The electrode clamping system for EDM-sinking according to the invention comprising the above electrode holder and the two-sided symmetrical supply of the dielectric for EDM-sinking enables machining times being reduced by 50% in comparison with machining without flushing of contamination particles.

## Claims

1. An electrode clamping system for EDM-sinking machines, comprising:
an adjustable holder for clamping an electrode, the holder comprising a basic part (1) where a dielectric supply channel (2) splits for a supply of a dielectric into two nozzles (5, 5') being provided for a lateral symmetrical supply of the dielectric into a gap between the electrode and a machining part from both sides of the electrode, the holder comprising a fixed part (3) having one (5) of the two nozzles (5, 5') and a supply channel (2') for supplying the dielectric from the basic part (1) to said one nozzle (5),
**characterized in that** .
the holder comprises an adjustable part (6) having the other one (5') of the two nozzles (5, 5') and a supply channel (2'') for supplying the dielectric from the basic part (1) to said other nozzle (5'), and
the holder comprises a button (7) for enabling a movement of the adjustable part (6) for clamping the electrode.

2. The electrode clamping system for EDM-sinking machines according to claim 1,
**characterized in that**
two symmetrical side chambers (4, 4') are provided in the fixed part (3) and the adjustable part (6) of the holder, respectively, and are terminated each with one of the nozzles (5, 5') enabling the supply of the dielectric through the holder into the gap between the electrode and the machining part from both sides of the electrode.

3. The electrode clamping system for EDM-sinking machines according to claim 1 or claim 2,
**characterized in that**
an automatic control circuit (19-22) is provided for controlling the pressure of the dielectric and in turn the flow of the dielectric, the dielectric flow being controlled with reference to a contamination particle concentration in the gap between the electrode and the machining part.

4. The electrode clamping system for EDM-sinking machines according to any one of claims 1-3,
**characterized in that**
an automatic control circuit (19-22) is provided for controlling the pressure of the dielectric and in turn the flow of the dielectric, the control circuit automatically reducing the dielectric flow to a value at which vibrations of the electrode caused by the supply of the dielectric disappear at a moment of a transition from a rough to a fine machining.

## Patentansprüche

1. Elektroden-Klemmvorrichtung für Senkerosionsvorrichtungen, umfassend:
eine verstellbare Haltevorrichtung zum Klemmen einer Elektrode, wobei die Haltevorrichtung einen Grundteil (1) umfasst, in dem sich ein Dielektrikum-Zufuhrkanal (2) zur Zufuhr eines Dielektrikums zu zwei Düsen (5, 5') teilt, welche für eine seitliche symmetrische Zufuhr des Dielektrikums in eine Lücke zwischen der Elektrode und einem bearbeitenden Teil von beiden Seiten der Elektrode vorhanden ist, wobei die Haltevorrichtung ein feststehendes Teil (3) mit einer (5) der zwei Düsen (5, 5') und mit einem Zufuhrkanal (2') zum Zuführen des Dielektrikums von dem Grundteil (1) zu der einen Düse (5) umfasst,
**dadurch gekennzeichnet,**
**dass** die Haltevorrichtung einen verstellbaren Teil (6) mit der anderen (5') der zwei Düsen (5, 5') und mit einem Zufuhrkanal (2'') zum Zuführen des Dielektrikums von dem Grundteil (1) zu der anderen Düse (5') umfasst, und
**dass** die Haltevorrichtung einen Knopf (7) zum Ermöglichen einer Bewegung des verstellbaren Teiles (6) zum Klemmen der Elektrode umfasst.

2. Elektroden-Klemmvorrichtung für Senkerosionsvorrichtungen nach Anspruch 1,
**dadurch gekennzeichnet,**
**dass** zwei symmetrische Seitenkammern (4, 4') in dem feststehenden Teil (3) beziehungsweise dem verstellbaren Teil (6) der Haltevorrichtung vorhanden sind, von denen jede mit einer der Düsen (5, 5') abgeschlossen ist, welche die Zufuhr des Dielektrikums durch die Haltevorrichtung in die Lücke zwischen der Elektrode und dem bearbeitenden Teil von beiden Seiten der Elektrode ermöglichen.

3. Elektroden-Klemmvorrichtung für Senkerosionsvorrichtungen nach Anspruch 1 oder Anspruch 2,
**dadurch gekennzeichnet,**
**dass** eine automatische Steuerungsschaltung (19 - 22) zum Steuern des Druckes des Dielektrikums und damit des Durchflusses des Dielektrikums vorhanden ist, wobei der Dielektrikum-Durchfluss mit Bezug auf eine Konzentration von Verunreinigungsteilchen in der Lücke zwischen der Elektrode und dem bearbeitenden Teil gesteuert wird.

4. Elektroden-Klemmvorrichtung für Senkerosionsvorrichtungen nach einem der Ansprüche 1 - 3,
**dadurch gekennzeichnet,**
**dass** eine automatische Steuerungsschaltung (19 - 22) zum Steuern des Druckes des Dielektrikums und damit des Durchflusses des Dielektrikums vorhanden ist, wobei die Steuerungsschaltung automatisch den Dielektrikum-Durchfluss auf einen Wert verringert, bei welchem durch die Zufuhr des Dielektrikums verursachte Vibrationen der Elektrode in einem Moment eines Überganges von einer groben zu einer feinen Bearbeitung verschwinden.

## Revendications

1. Système de serrage d'électrode destiné à des machines d'usinage par électroérosion, comprenant :
un support ajustable pour serrer une électrode, le support comprenant une partie de base (1) dans laquelle un canal d'alimentation diélectrique (2) se divise pour alimentation en diélectrique dans deux buses (5, 5') étant prévues pour alimentation symétrique latérale en diélectrique dans un espace entre l'électrode et une partie d'usinage à partir des deux côtés de l'électrode, le support comprenant une partie fixe (3) ayant une buse (5) parmi les deux buses (5, 5') et un canal d'alimentation (2' ) pour délivrer le diélectrique de la partie de base (1) à ladite buse (5),
**caractérisé en ce que**
le support comprend une partie ajustable (6) ayant l'autre buse (5') parmi les deux buses (5, 5') et un canal d'alimentation (2'') pour délivrer le diélectrique de la partie de base (1) à ladite autre buse (5'), et
le support comprend un bouton (7) pour permettre un déplacement de la partie ajustable (6) pour serrer l'électrode.

2. Système de serrage d'électrode destiné à des machines d'usinage par électroérosion selon la revendication 1,
**caractérisé en ce que**
deux chambres latérales symétriques (4, 4') sont disposées dans la partie fixe (3) et dans la partie ajustable (6) du support, respectivement, et sont terminées chacune avec une des buses (5, 5') permettant l'alimentation en diélectrique à travers le support dans l'espace entre l'électrode et la partie d'usinage à partir des deux côtés de l'électrode.

3. Système de serrage d'électrode destiné à des machines d'usinage par électroérosion selon la revendication 1 ou 2,
**caractérisé en ce que**
un circuit de commande automatique (19 à 22) est prévu pour commander la pression du diélectrique et, à son tour, l'écoulement du diélectrique, l'écoulement du diélectrique étant commandé en se référant à une concentration en particules de contamination dans l'espace entre l'électrode et la partie d'usinage.

4. Système de serrage d'électrode destiné à des machines d'usinage par électroérosion selon l'une quelconque des revendications 1 à 3,
**caractérisé en ce que**
un circuit de commande automatique (19 à 22) est prévu pour commander la pression du diélectrique et, à son tour, l'écoulement du diélectrique, le circuit de commande réduisant automatiquement l'écoulement du diélectrique à une valeur à laquelle les vibrations de l'électrode provoquées par l'alimentation en diélectrique disparaissent à un moment de transition d'un usinage approché à fin.
